# EUROPÄISCHE PATENTSCHRIFT

(11) **EP 0 540 852 B1**
(45) Veröffentlichungstag und Bekanntmachung des Hinweises auf die Patenterteilung: **19.07.1995**
(21) Anmeldenummer: 92115375.5
(22) Anmeldetag: 09.09.1992
(51) Int. Cl.: B60T 8/36, B60T 13/68

(54) **Relaisventileinrichtung**
Relay valve
Soupape relais

(30) Priorität: 02.11.1991 DE 4136244
(43) Veröffentlichungstag der Anmeldung: 12.05.1993
(73) Patentinhaber: WABCO STANDARD GmbH, D-53008 Bonn (DE)
(72) Erfinder: Kiel, Bernd, W-3050 Wunstorf 1 (DE)
(74) Vertreter: Schrödter, Manfred, Dipl.-Ing.

(56) Entgegenhaltungen:
- EP-A- 0 307 579

## Beschreibung

Die Erfindung betrifft eine Relaisventileinrichtung gemäß dem Oberbegriff des Patentanspruchs 1.

Eine derartige Relaisventileinrichtung wird von der Firma WABCO Westinghouse Fahrzeugbremsen GmbH unter der Gerätenummer 472 195 020 0 angeboten.

Bei einer derartigen Relaisventileinrichtung, deren Steuerkammer über ein elektromagnetisch betätigbares Einlaßventil belüftet und über ein elektromagnetisch betätigbares Auslaßventil entlüftet wird, kann es passieren, daß bei einem mittels des Einlaßventils und des Auslaßventils geregelten Bremsvorganges in der Druckhaltephase (Einlaß- und Auslaßventil geschlossen) bei schnellem Druckabbau in der zum Einlaßventil führenden, mit einem Steueranschluß verbundenen Druckmittel-Steuerleitung das Auslaßventil nicht schnell genug in die Offenstellung gelangt.

Das verzögerte Ansprechen des Auslaßventils wird dadurch verursacht, daß eine mit der Relaisventileinrichtung zusammenwirkende elektrische Regelschaltung eines mit einem Antiblockier-Regelsystem ausgerüsteten Fahrzeugs bei einem geregelten Bremsvorgang nicht erkennen kann, wenn der Fahrer des Fahrzeugs zwecks Abbrechens des Bremsvorganges über das der Relaisventileinrichtung vorgeschaltete Bremsbetätigungsventil die zum elektromagnetisch betätigbaren Einlaßventil der Relaisventileinrichtung führende Leitung entlüftet.

Erst dann, wenn aufgrund des in der Steuerkammer noch vorhandenen Steuerdruckes auch der von der Relaisventileinrichtung ausgesteuerte Bremsdruck eine weitere Verzögerung der Fahrzeugräder verursacht und von der elektrischen Regelschaltung Blockierneigung an den Fahrzeugrädern erkannt wird, gibt die elektrische Regelschaltung ein Signal auf das elektromagnetisch betätigbare Auslaßventil. Dieses gelangt nun in seine Offenstellung. Die Steuerkammer wird entlüftet. Der Relaiskolben bringt das Auslaßventil des kombinierten Einlaß- und Auslaßventils der Relaisventileinrichtung in die Offenstellung und die Bremszylinder des Fahrzeugs werden entlüftet.

Die Folgen des verzögerten Ansprechens des elektromagnetisch betätigbaren Auslaßventils sind verzögert einsetzender Druckabbau in der Steuerkammer und somit auch eine verzögerte Reaktion des Relaiskolbens, woraus ein verzögerter Bremsdruckabbau in den Bremszylindern resultiert, was wiederum einen gewollten Abbruch eines Bremsvorganges verzögert.

Um diesem Umstand zu begegnen, ist zwischen der vom Steueranschluß zum Einlaßventil führenden Druckmittel-Steuerleitung und der Steuerkammer ein Rückschlagventil angeordnet, welches bei vorhandensein von Steuerdruckmittel in der Druckmittel-Steuerleitung in der Schließstellung gehalten wird und beim Druckabbau in der Druckmittel-Steuerleitung vom Druckmittel in der Steuerkammer in Richtung auf die Druckmittel-Steuerleitung zu in die Offenstellung gebracht wird.

Beim Druckabbau in der mit dem Steueranschluß verbundenen Druckmittel-Steuerleitung beginnt aufgrund dieser Maßnahme der Druckabbau in der Steuerkammer bereits bevor das elektromagnetisch betätigbare Auslaßventil öffnet. Es entstehen somit keine Totzeiten mehr zwischen dem Druckabbau in der Druckmittel-Steuerleitung und dem Druckabbau in der Steuerkammer.

Das Rückschlagventil ist bei der bekannten Relaisventileinrichtung in der Gehäusewand zwischen der Steuerkammer und der mit dem Steueranschluß verbundenen Druckmittel-Steuerleitung (Kanal in dieser Wand) angeordnet.

Eine solche Anordnung des Rückschlagsventils erfordert jedoch verschiedene aufwendige Maßnahmen und Mittel. In der Gehäusewand muß eine abgestufte Bohrung zur Aufnahme des Rückschlagventils vorgesehen werden. Es müssen besondere Haltemittel zum halten des Rückschlagventils in der Bohrung vorgesehen werden. Desweiteren sind besondere Dichtmittel anzuordnen.

Bei einer solchen bekannten Relaisventileinrichtung ist es zudem erforderlich, für den Anker des Elektromagnet-Einlaßventils eine Ankerabstützung vorzusehen, die so ausgebildet sein sollte, daß unter den Anker Druckmittel gelangen kann, um beim Schließvorgang des Elektromagnet-Einlaßventils die Bewegung des Ankers zu beschleunigen.

Der Erfindung liegt die Aufgabe zugrunde, eine Relaisventileinrichtung der Eingangs erwähnten Art so zu verbessern, daß die Anordnung und Ausbildung des Rückschlagsventils vereinfacht wird.

Diese Aufgabe wird mit der im Patentanspruch 1 angegebenen Erfindung gelöst. Weiterbildungen und vorteilhafte Ausgestaltungen der Erfindungen sind in den Unteransprüchen angegeben.

Die Erfindung bietet insbesondere den Vorteil, durch das Zusammenfassen von Rückschlagventil und Ankerabstützung für den Anker des Einlaßventils zu einer Baueinheit nicht mehr zwei Stellen für das Rückschlagventil und für die Ankerabstützung in der Relaisventileinrichtung bearbeiten zu müssen.

Vorteilhafterweise dient die den Raum zur Aufnahme der Abstützung für den Anker seitlich begrenzende Wand als Ventilsitz für das Rückschlagventil, so daß lediglich ein Ventilkörper benötigt wird und nicht ein speziell ausgebildetes Rückschlagventil mit Ventilsitz erforderlich ist.

Die Abstützung für den Anker ist vorteilhafterweise aus einem nichtmetallischen Werkstoff gefertigt, wie z. B. Kunststoff oder Gummi. Durch diese Maßnahme wird vorteilhafterweise ein Kleben des metallischen Ankers an der Abstützung für den Anker verhindert.

Das Kleben des Ankers an einer metallischen Abstützung entsteht bei tiefen Temperaturen und gleichzeitigem Vorhandensein von Feuchtigkeit.

Der Dichtkörper des Rückschlagventils ist in vorteilhafterweise in eine Umfangsnut der Abstützung für den Anker eingeschnappt.

Aus der EP-A 0 307 579 ist eine in einer druckmittelbetätigten Bremsanlage eines Fahrzeugs angeordnete magnetgesteuerte Ventileinrichtung bekannt, die ein Relaisventil, ein magnetgesteuertes Absperrventil, ein magnetgesteuertes Umschaltventil und ein Rückschlagventil enthält. Der Eingang des Relaisventils ist mit einem Druckluft-Vorratsbehälter und der Ausgang des Relaisventils ist mit einem Bremszylinder verbunden. Über eine als Steuerleitung dienende Druckmittelleitung, in welcher das Absperrventil und das Umschaltventil in Reihe angeordnet sind, ist eine Steuerkammer des Relaisventils mit einem als Steuerdruckquelle dienenden Bremswertgeber verbunden.

Das Absperrventil sperrt bei erregtem Magneten die Steuerleitung. Das Umschaltventil sperrt bei erregtem Magneten den stromaufwärts des Umschaltventils gelegenen Teil der Steuerleitung und verbindet den stromabwärts des Umschaltventils gelegenen Teil der Steuerleitung mit dem Druckentlastungsraum des Relaisventils.

Zwischen dem Bremswertgeber und der Steuerkammer des Relaisventils ist in einer das Absperrventil und das Umschaltventil umgehenden Druckmittelleitung das in Richtung auf die Steuerkammer des Relaisventils zu sperrende Rückschlagventil angeordnet. Durch die Anordnung dieses Rückschlagventils in der Umgehungsleitung kann der Bremszylinder bei Umschalten des Bremswertgebers in seine Entlüftungsstellung unter Umgehung des Umschaltventils und des Absperrventils direkt über den Bremswertgeber entlüftet werden, was einen Schnelllöse-Effekt des Bremszylinders zur Folge hat.

Bei dieser bekannten Ventileinrichtung ist das Rückschlagventil jedoch nicht Teil der Ankerabstützung eines der beiden magnetgesteuerten Ventile.

Anhand der Zeichnung wird nachfolgend ein Ausführungsbeispiel der Erfindung näher erläutert.

Es zeigen:
- Figur 1: eine Relaisventileinrichtung mit zwei zur Beeinflussung des Steuerdruckes dienenden Elektromagnetventilen und einem zwischen der Steuerkammer und einer zum Steuerdruckmittelanschluß führenden Druckmittel-Steuerleitung angeordneten Rückschlagventil und
- Figur 2: einen Ausschnitt des Elektromagnet-Einlaßventils mit einer Abstützung für den Anker und das mit der Abstützung eine Baueinheit bildende Rückschlagventil.

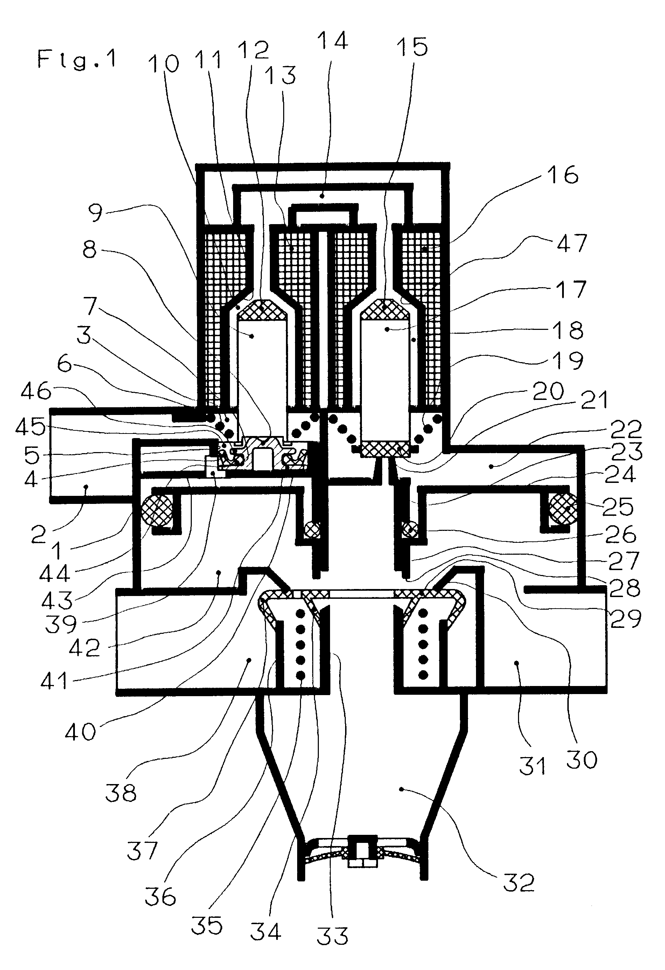

In Figur 1 ist eine Relaisventileinrichtung dargestellt mit einem Gehäuse (1), in welchem ein Relaiskolben (24) mittels zwei Dichtringen (25) und (26) abgedichtet in Richtung der Längsachse des Gehäuses (1) bewegbar angeordnet ist. Der Relaiskolben (24) trennt eine Steuerkammer (22) von einer Arbeitskammer (42). An die Arbeitskammer (42) schließt ein mit einem Verbraucher verbundener Druckmittelausgang (31) an. Die Arbeitskammer (42) ist über ein kombiniertes Einlaß- und Auslaßventil (30, 29, 28) wahlweise, d. h., in Abhängigkeit von der Stellung des Relaiskolbens (24), mit einer Druckmitteleingangskammer (38), die mit einem Druckmittel-Vorratsbehälter verbunden ist, oder mit einem zu einer Druckmittelsenke hin führenden Auslaß (32) verbindbar oder gegen beide absperrbar. Bei einem mit Druckluft betriebenen Gerät ist die Druckmittelsenke die Atmosphäre und bei einem mit einem flüssigen Druckmittel betriebenen Gerät ist die Druckmittelsenke ein Rücklauf (Flüssigkeits-Vorratsbehälter)

Ein als Dichtkörper (29) für das kombinierte Einlaß- und Auslaßventil (30, 29, 28) dienendes Formteil weist zwei umlaufende Vorsprünge (34) und (37) auf, welche mit zwei sich in das Gehäuse (1) hineinerstreckenden umlaufenden Vorsprünge (33) und (36) des Gehäuses (1) eine Führung für den Dichtkörper (29) bilden.

Mittels einer Feder (35) wird der Dichtkörper (29) gegen einen gehäusefesten Einlaßventilsitz (30) gedrückt. Ein sich auf den Dichtkörper (29) zu erstreckender abgestufter rohrförmiger Fortsatz (27) des Relaiskolbens (24) bildet mit seinem freien Ende einen Auslaßventilsitz (28).

Ein ebenfalls rohrförmig ausgebildetes Teil (23) einer die Steuerkammer (22) begrenzenden Wand (43) des Gehäuses (1) erstreckt sich in den rohrförmigen Fortsatz (27) des Relaiskolbens (24) hinein und dient als zusätzliche Führung für den Relaiskolben (24). Mittels des Dichtringes (26) ist der Spalt zwischen der äußeren Mantelfläche des rohrförmigen Teiles (23) der Wand (43) und der Innenwand des rohrförmigen Fortsatzes (27) des Relaiskolbens (24) abgedichtet.

Die Steuerkammer (22) ist über einen Steueranschluß (2), eine als Gehäusekanal ausgebildete Druckmittel-Steuerleitung (3), einen ersten Kanal (10), einen an diesen Kanal anschließenden zweiten Kanal (14) und einen mit diesem verbundenen dritten Kanal (18) mit Steuerdruckmittel aus einer Steuerdruckmittelquelle beaufschlagbar. Die Druckmittel-Steuerleitung (3) ist im Bereich des Einlaßventils eines elektromagnetisch betätigten Steuerventils als Kammer ausgebildet.

Der erste Kanal (10) wird von in Richtung der Längsachse eines ersten Spulenträgers verlaufenden Rippen und der äußeren Mantelfläche eines Ankers (9) eines Elektromagnet-Einlaßventils oder von in die äußere Mantelfläche des Ankers (9) eingearbeiteten, in dessen Längsrichtung verlaufenden Nuten gebildet. Desgleichen wird der zweite Kanal (18) von in Längsrichtung eines zweiten Spulenträgers verlaufenden Rippen und der äußeren Mantelfläche eines Ankers (17) eines kombinierten Elektromagnet- Einlaß- und Auslaßventils oder von in die äußere Mantelfläche des Ankers (17) eingearbeiteten, in dessen Längsrichtung verlaufenden Nuten gebildet.

Das Elektromagnet- Einlaß- und Auslaßventil setzt sich aus dem zweiten Spulenträger mit einer Spule (16), dem Anker (17) mit einem ersten Dichtkörper (20) sowie einem Auslaßventilsitz (21), der an dem rohrförmigen Teil (23) der Wand (43) des Gehäuses (1) angeordnet ist und einem mit einem Einlaßventilsitz (47) zusammenwirkenden zweiten Dichtkörper (15) zusammen, wobei der Einlaßventilsitz (47) dem Auslaßventilsitz (21) gegenüber angeordnet ist. Mittels einer Feder (19) wird der Anker (17) mit seinem ersten Dichtkörper (20) auf dem Auslaßventilsitz (21) gehalten, der gleichzeitig die Funktion einer Ankerabstützung hat.

Das Elektromagnet-Einlaßventil setzt sich aus dem ersten Spulenträger mit einer Spule (13), dem Anker (9) mit einem Dichtkörper (12) sowie einem Einlaßventilsitz (11) zusammen. Der Einlaßventilsitz (11) ist Teil des ersten Spulenträgers und zwischen dem ersten Kanal (10) und dem zweiten Kanal (14) gelegen.

Das Elektromagnet-Einlaßventil (9, 11, 12, 13) und das kombinierte Elektromagnet-Einlaß- und Auslaßventil (17, 15, 47, 20, 21, 16) bilden ein Steuerventil zur Steuerung des Druckes in der Steuerkammer (22). Eine Feder (6) hält den Anker (9) des Elektromagnet-Einlaßventils (9, 11, 12, 13)auf einer Ankerabstützung (8, 41, 7, 46). Die Ankerabstützung (8, 41, 7, 46) besteht aus einem nichtmetallischen Werkstoff, wie zum Beispiel Gummi oder Kunststoff. Gelagert ist die Ankerabstützung (8, 41, 7, 46) in einer Ausnehmung (45), die koaxial zum Anker (9) in der Wand (43) des Gehäuses (1) angeordnet ist und einen Boden (40) sowie eine umlaufende Wand (5) aufweist.

Die Ankerabstützung (8, 41, 7, 46) weist eine umlaufende Nut (7) auf, in der ein Nutring (44, 4) gelagert ist. Die äußere Lippe (4) des Nutringes (44, 4) liegt mit der äußeren Mantelfläche ihres freien Endbereiches dichtend an der die Ausnehmung (45) zur Aufnahme der Ankerabstützung (8, 41, 7, 46) seitlich begrenzenden umlaufenden Wand (5) an und bildet mit dieser sowie mit der Ankerabstützung (8, 41, 7, 46) ein Rückschlagventil (44, 4, 5, 8, 41, 7, 46).

Der Nutring (4, 44) ist so angeordnet, daß er mit seiner offenen Seite zur Druckmittel-Steuerleitung (3) (Eingangskammer (3)) des Elektromagnet-EinlaßventilS (13, 9, 12, 11)) hinweist, so daß bei druckloser Druckmittel-Steuerleitung (3) (Eingangskammer) und druckloser Steuerkammer (22) oder bei Vorhandensein von Druckmittel in der Druckmittel-Steuerleitung (3) (Eingangskammer) und druckloser Steuerkammer (22) oder auch bei Vorhandensein von Druckmittel in der Druckmittel-Steuerleitung (3) (Eingangskammer) und in der Steuerkammer (22) sich das Rückschlagventil (44, 4, 5, 8, 41, 7, 46) in der Schließstellung befindet. Das Rückschlagventil (44, 4, 5, 8, 41, 7, 46) wird nur dann in die Offenstellung gebracht, wenn sich in der Steuerkammer (22) Steuerdruckmittel befindet und die Druckmittel-Steuerleitung (3) (Eingangskammer) des Elektromagnet-EinlaßventilS (13, 9, 12, 11) bei geschlossenem Elektromagnet-Einlaßventil (13, 9, 12, 11) über den Steueranschluß (2) und ein diesem vorgeschaltetes Ventil, wie z. B. ein Trittplatten-Bremsventil entlüftet wird.

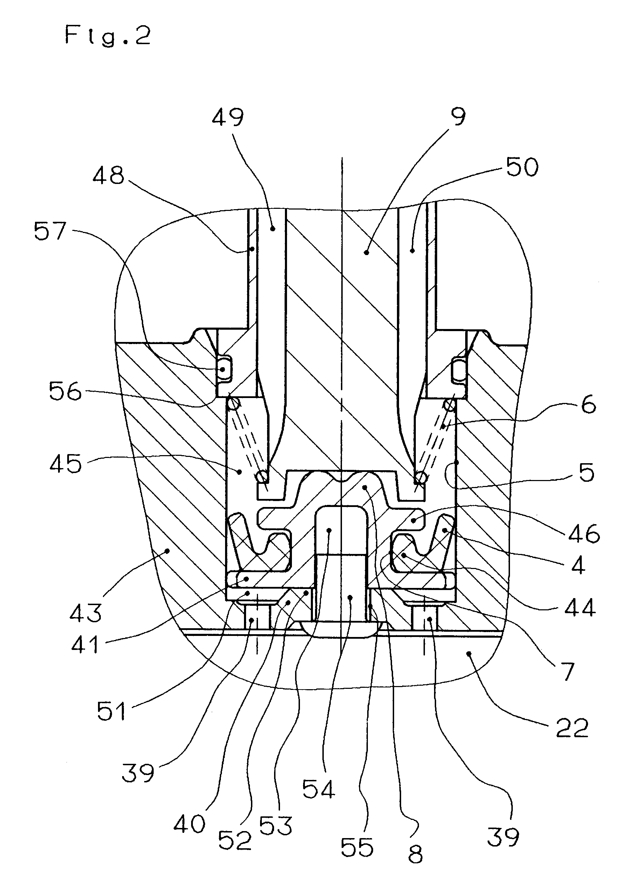

Der die Ausnehmung (45) begrenzende Boden (40) der Ausnehmung zur Aufnahme der Ankerabstützung (8, 41, 7, 46) und des Rückschlagventils (44, 4, 5, 8, 41, 7, 46) weist einen von der Steuerkammer (22) zum Rückschlagventil (44, 4, 5, 8, 41, 7, 46) führenden Durchlaß (39) auf. Das ringförmige Teil (41) der Ankerabstützung (8, 41, 7, 46) weist einen geringeren Durchmesser auf als die Ausnehmung (45), so daß die aus der Steuerkammer (22) ausströmende Druckluft zu der Dichtlippe (4) des Nutrings (4, 44) gelangen kann. In Figur 2 sind im vergrößertem Maßstab ein Teil des Ankers (9) des Elektromagnet-Einlaßventils (13, 9, 12, 11) und die Ankerabstützung (8, 41, 7, 46) mit Rückschlagventil (44, 4, 5, 8, 41, 7, 46) dargestellt. Der besseren Übersicht halber sind die den in Figur 1 gezeigten Bauteilen gleichen Bauteile mit gleichen Bezugsziffern versehen.

Figur 2 zeigt den in einem Ankerführungsrohr (48) geführten Anker (9). Das Ankerführungsrohr (48) ist in einer Abstufung (56) der die Ausnehmung (45) begrenzenden Wand (5) mittels eines Dichtringes (57) abgedichtet gelagert. Zur Führung des Ankers (9) dienen am Anker (9) angeordnete, in Richtung seiner Längsachse verlaufende Rippen (49, 50). Von der Wand des Ankerführungsrohres (48) und den einander zugewandten Seiten von je zwei Rippen werden erste Kanäle (in Fig. 1 Kanal (10)) gebildet, durch welche bei geöffnetem Elektromagnet-Einlaßventil (9, 11, 12, 13) Steuerdruckmittel von der Druckmittelsteuerleitung (3) (Eingangskammer des Elektromagnet-Einlaßventils (9, 11, 12, 13)) zu dem in Figur 1 gezeigten zweiten Kanal (14) und von diesem weiter über den dritten Kanal (18) in die Steurerkammer (22) gelangt.

Der Anker (9) wird bei geöffneten Elektromagnet-Einlaßventil (9, 11, 12, 13) mittels der Feder (6) auf der Ankerabstützung (8, 41, 7, 46) gehalten. Die Ankerabstützung (8, 41, 7, 46) ist in einer koaxial zum Anker (9) in einer Wand (43) des Gehäuses (1) angeordneten Ausnehmung (45) gelagert, wie bereits erwähnt. Sie liegt mit einem ringförmigen Teil (41) auf einer Erhöhung (52) des Bodens (40) der Ausnehmung (45) auf, so daß von dem Boden (40) der Ausnehmung (45) und der diesem zugewandten Seite des ringförmigen Teiles (41) eine Ringkammer (51) gebildet wird, die über im Boden (40) vorgesehene Durchlässe (39, 39') mit der Steuerkammer (22) verbunden ist. Das ringförmige Teil (41) ist Bestandteil der vorzugsweise als Kunststoffspritzteil gefertigten Ankerabstützung (8, 41, 7, 46).

Die Ankerabstützung (8, 41, 7, 46) weist praktisch die Form eines Topfes auf, dessen ringförmiges Teil (41) sich quer zur Längsachse des topfförmigen Teiles (8) nach außen erstreckt und mit dem Teil (41) auf der Erhöhung (52) des Bodens (40) der Ausnehmung (45) aufliegt. Das ringförmige Teil (41) weist einen geringeren Durchmesser auf als die dieses aufnehmende Ausnehmung (45), so daß durch den Spalt zwischen der die Ausnehmung (45) begrenzenden Wand (5) und der Umfangsfläche des ringförmigen Teiles (41) Steuerdruckmittel aus der Ringkammer (51) zum Rückschlagventil (44, 4, 5, 41, 8, 7, 46) gelangen kann.

An dem topfförmigen Teil (8) ist ein weiterer umlaufender Vorsprung (46) vorgesehen, der sich radial nach außen erstreckt. Die dem ringförmigen Teil (41) zugewandte Seite des umlaufenden Vorsprungs (46) und die dem umlaufenden Vorsprung (46) zugewandte Seite des ringförmigen Teiles (41) bilden mit einem Teil (7) des topfförmigen Teiles (8) eine Nut, in der der Nutring (44, 4) gelagert ist. Der Nutring (44, 4) ist in der von dem ringförmigen Teil (41), dem umlaufenden Vorsprung (46) und dem Teil (7) gebildeten Nut derart angeordnet, daß er in seinem freien Endbereich mit seiner umlaufenden äußeren Mantelfläche seiner elastisch verformbaren Lippe (4) an der Wand (5) der Ausnehmung (45) dichtend anliegt. Der dem Anker (9) zugewandte Teil der Ankerabstützung (8, 7, 41, 46) ist in etwa kronenförmig ausgebildet. Auf diesem kronenförmigen Teil liegt der Anker (9) mit seiner Stirnfläche auf und wird mittels der Feder (6) auf der Ankerabstützung (8, 7, 41, 46) gehalten.

Mittels eines nietartigen Teiles (54) welches durch eine im Boden (40) vorgesehene Öffnung (55) hindurchgeführt und in eine Ausnehmung (53) der Ankerabstützung (8, 7, 41, 46) eingepreßt ist, wird die Ankerabstützung (8, 7, 41, 46) in der Ausnehmung (45) gehalten.

Das Rückschlagventil kann selbstverständlich auch so ausgebildet sein, daß ein Rückschlagelement (Dichtkörper), der z. B. aus einem elastisch verformbaren lappenartiges Teil bestehen kann, an der Ankerabstützung befestigt ist und auf einem Durchlaß der Ankerabstützung aufliegt.

Die Funktion der vorstehend beschriebenen Relaisventileinrichtung wird nachfolgend näher erläutert.

Es wird angenommen, daß die Relaisventileinrichtung mit ihrem Steueranschluß (2) an das Trittplattenventil, der mit der Druckmitteleingangskammer (38) verbundene Druckmitteleingang an einen Druckmittel-Vorratsbehälter und der mit der Arbeitskammer (42) in Verbindung stehende Druckmittelausgang (31) an den Bremszylinder eines Kraftfahrzeugs angeschlossen sind. Selbstverständlich ist jedem Bremszylinder des Fahrzeugs eine derartige Relaisventileinrichtung zugeordnet, die in der gleichen Weise angeschlossen ist.

Zu Beginn eines Bremsvorganges befinden sich die Ventile und der Relaiskolben der Relaisventileinrichtung in der gezeigten Position. Das Elektromagnet-Einlaßventil (9, 11, 12, 13) befindet sich in der Offenstellung, das Elektromagnet-Auslaßventil (20, 21, 17)des kombinierten Elektromagnet-Einlaß- und Auslaßventils (17, 16, 15, 20, 21, 16) befindet sich in der Schließstellung, das Auslaßventil (28, 29) des kombinierten Einlaß- und Auslaßventils (28, 29, 30) des Relaisventils ist geöffnet und das Einlaßventil (29, 30) des kombinierten Einlaß- und Auslaßventils (28, 29, 30) des Relaisventils ist geschlossen.

Über den Steueranschluß (2), die Druckmittel-Steuerleitung (3) (Eingangskammer des Elektromagnet-Einlaßventils (9, 11, 12, 13)), den ersten Kanal (10), das geöffnete Elektromagnet-Einlaßventil (9, 11, 12, 13), den zweiten Kanal (14) das geöffnete Einlaßventil (17, 15, 16) des kombinierten Elektromagnet-Einlaß- und Auslaßventils (17, 15, 16, 20, 21, 16) und den dritten Kanal (18) gelangt als Steuerdruck dienendes Druckmittel vom Trittplattenventil in die Steuerkammer (22).

Der sich in der Steuerkammer (22) aufbauende Steuerdruck bewegt den Relaiskolben (24) nach unten in Richtung auf den Ventilkörper (29) des kombinierten Einlaß- und Auslaßventils (28, 29, 30) des Relaisventils zu. Dabei gelangt das Auslaßventil (28, 29) des kombinierten Einlaß- und Auslaßventils (28, 29, 30) des Relaisventils in die Schließstellung und das Einlaßventil (29, 30) des kombinierten Einlaß- und Auslaßventils (28, 29, 30) wird geöffnet.

Über die Druckmitteleingangskammer (38) und das jetzt in der Offenstellung befindliche Einlaßventil (29, 30) des kombinierten Einlaß- und Auslaßventils (28, 29, 30) gelangt vom Vorratsbehälter Arbeitsdruckmittel in die Arbeitskammer (42) des Relaisventils und von dieser weiter durch den Druckmittelausgang (31) zum Bremszylinder. Das Fahrzeug wird nun durch die ansprechenden Bremsen verzögert.

Bricht der Fahrer des Fahrzeugs den Bremsvorgang ab bevor Blockierneigung an den Rädern des Fahrzeugs auftritt, so wird die Steuerkammer (22) über den dritten Kanal (18), den zweiten Kanal (14), das Einlaßventil (17, 15, 16) des kombinierten Elektromagnet-Einlaß- und Auslaßventils (17, 15, 16, 20, 21), das Elektromagnet-Einlaßventil (9, 11, 12, 13), den ersten Kanal (10) sowie die Druckmittel-Steuerleitung (3) (Eingangskammer) den Steueranschluß (2) und das vorgeschaltete Trittplattenventil entlüftet.

Aufgrund der dabei auftretenden Druckdifferenz zwischen dem sich abbauenden Druck in der Steuerkammer (22) und dem Druck in der Arbeitskammer (42) wird der Relaiskolben (24) vom Druck in der Arbeitskammer (42) in Richtung auf die Steuerkammer (22) zu verschoben. Dabei wird der Ventilkörper (29) von der Feder (35) in Richtung auf dem Einlaßventilsitz (30) zu bewegt und kommt an diesem zur Anlage.

Das Einlaßventil (29, 30) und das Auslaßventil (28,29) des Relaisventils sind jetzt geschlossen. Bei der weiteren Bewegung des Relaiskolbens (24) in Richtung auf die Steuerkammer (22) zu hebt der Ventilsitz (28) vom Ventilkörper (29) des kombinierten Einlaß-Auslaßventils (28, 29, 30) des Relaisventils ab. Das Auslaßventil (28, 29) ist jetzt geöffnet. Der Bremszylinder wird über den Druckmittelausgang (31) die Arbeitskammer (42) sowie den Druckmittelauslaß (32) zur Atmosphäre hin entlüftet, wodurch die Bremsen gelöst werden.

Wird der Bremsvorgang vom Fahrer des Fahrzeugs nicht abgebrochen, so gelangt das Elektromagnet-Einlaßventil (9, 11, 12, 13) in die Schließstellung, sobald von der mit dieser Relaisventileinrichtung zusammenwirkenden elektrischen Regelschaltung erkannt wird, daß das dieser Relaisventileinrichtung zugeordnete Rad Blockierneigung zeigt.

Nach einer kurzen Druckhaltephase, sowohl in der Steuerkammer (22) als auch in der Arbeitskammer (42) und in dem zugeordneten Bremszylinder wird von der elektrischen Regelschaltung ein Signal auf das Elektromagnet-Auslaßventil (20, 21, 17) des kombinierten Elektromagnet-Einlaß- und Auslaßventils (17, 15, 16, 20, 21, 16) gegeben, welches bewirkt, daß dieses in die Offenstellung gelangt.

Die Steuerkammer (22) wird über das geöffnete Elektromagnet-Auslaßventil (20, 21, 17) und den Druckmittelauslaß (32) zur Atmosphäre hin entlüftet. Der Druck im Bremszylinder und somit auch der Druck in der Arbeitskammer (42) wird, wie bereits im vorstehenden beschrieben, über das in die Offenstellung gelangende Auslaßventil (28, 29) des kombinierten Einlaß- und Auslaßventils (28, 29, 30) des Relaisventils und den Druckmittelauslaß (32) zur Atmosphäre hin entlüftet.

Wird während der Druckhaltephase (Elektromagnet-Einlaßventil (9, 11, 12, 13)) geschlossen; Elektromagnet-Auslaßventil (20, 21, 16, 17) des kombinierten Elektromagnet-Einlaß- und Auslaßventils (17, 15, 16, 20, 21, 16) geschlossen) der Bremsvorgang vom Fahrer des Fahrzeugs abgebrochen, so wird die Druckmittelsteuerleitung (3) und somit auch die Eingangskammer des Elektromagnet-Einlaßventils (9, 11, 12, 13) über den Steueranschluß (2) und das vorgeschaltete Trittplattenventil entlüftet.

Aufgrund der dabei auftretenden Druckdifferenz zwischen dem Druck in der Steuerkammer (22) und dem Druck in der Druckmittel-Steuerleitung (3) (Eingangskammer des Elektromagnet-Einlaßventils (9, 11, 12, 13)) wird das Rückschlagventil (4, 44, 5, 8, 7, 41, 46) vom Druckmittel in der Steuerkammer (22) in Richtung auf die Druckmittel-Steuerleitung (3) (Eingangskammer des Elektromagnet-Einlaßventils (9, 12, 11, 13) zu in die Offenstellung gebracht. Der Druck in der Steuerkammer (22) entweicht nun über das geöffnete Rückschlagventil (4, 44, 8, 7, 41, 46, 5) in die Druckmittel-Steuerleitung (3) (Eingangskammer des Elektromagnet-Einlaßventils (9, 12, 11, 13) und von dieser über den Steueranschluß (2) und das vorgeschaltete Trittplattenventil zur Atmosphäre hin.

Solange der Druck in der Druckmittel-Steuerleitung (3) (Eingangskammer des Elektromagnet-Einlaßventils (9, 12, 11, 13)) und der Druck in der Steuerkammer (2) gleich sind oder der Druck in der Druckmittel-Steuerleitung (3) höher ist als der Druck in der Steuerkammer (22), wird das Rückschlagventil (4, 44, 5) in der Schließstellung gehalten.

Abweichend von Fig. 2 sitzt die Ankerabstützung (8, 41, 7, 46) gemäß Fig. 1 nicht auf einer Erhöhung des die Ausnehmung (45) begrenzenden Bodens (40) sondern auf einer ebenen Bodenfläche der Ausnehmung (45) auf. Das ringförmige Teil (41) der Ankerabstützung (8, 41, 7, 46) erstreckt sich in diesem Ausführungsbeispiel auch nicht über den gesamten Durchlaß (39) im Boden (40). Die Ankerabstützung (8, 41, 7, 46) ist so ausgebildet, daß wenigstens ein Teilbereich der der Ankerabstützung (8, 41, 7, 46) zugewandten Stirnseite des Ankers (9) des Elektromagnet-Einlaßventils (9, 12, 11, 13) vom Steuerdruckmittel in Schließrichtung des Elektromagnet-Einlaßventils (9, 12, 11, 13) beaufschlagt wird, wodurch der Schließvorgang des Elektromagnet-Einlaßventils (9, 12, 11, 13) beschleunigt wird. Die dem Anker (9) des Elektromagnet-Einlaßventils (9, 12, 11, 13) zugewandte Seite der Ankerabstützung (8, 41, 7, 46) weist zu diesem Zweck einen kleineren Querschnitt auf, als die dieser Seite zugewandte Seite des Ankers (9). Die Ankerabstützung (8, 41, 7, 46) kann auf ihrer dem Anker (9) zugewandten Seite kronenartig ausgebildet sein.

Anstelle eines kombinierten Elektromagnet-Einlaß- und Auslaßventils (17, 15, 16, 20, 21) kann auch ein einfaches Elektromagnet-Auslaßventil (17, 20, 21) vorgesehen werden, so daß das Steuerventil aus einem Elektromagnet-Einlaßventil (9, 12, 11, 13) und einem Elektromagnet-Auslaßventil (17, 16 20, 21) besteht.

Das Rückschlagventil kann selbstverständlich auch anders ausgebildet sein als in der Zeichnung dargestellt. Es kann z. B. von einem elastisch verformbaren lappenartigen Teil und dem Durchlaß (39) im Boden (40) der Ausnehmung (45) gebildet werden, wobei das lappenartige Teil an der Ankerabstützung oder am Boden (40) der Ausnehmung (45) befestigt ist und den Durchlaß (39) abdeckt. Eine andere Ausgestaltung des Rückschlagventils kann ein Durchlaß in einem Teil der Ankerabstützung und ein mit diesem Durchlaß in Wirkverbindung stehender Dichtkörper sein. In einem solchen Fall, muß zwischen der Ankerabstützung und der den Durchlaß (39) aufweisenden Wand (40) ein Dichtmittel vorgesehen werden, so daß die Steuerkammer (22) und die Druckmittel-Steuerleitung (3) (Eingangskammer für das Elektromagnet-Einlaßventil (9, 11, 12, 13)) über das Rückschlagventil miteinander in Verbindung gebracht werden können und nicht durch einen Spalt zwischen Ankerabstützung und die diese haltende bzw. aufnehmenden Wandungen.

Die Ankerabstützung für den Anker des Elektromagnet-Einlaßventils der Relaisventileinrichtung kann selbstverständlich auch mittels Schnappverbindungsmittel mit der Wand (40) der Relaisventileinrichtung verbunden werden. Die Schnappverbindungsmittel können z. B. aus einem mit einem Kopf versehenen Stift bestehen, der an seinem in eine Ausnehmung der Ankerabstützung hineinragenden Endbereich Vorsprünge aufweist, welche in entsprechende Vertiefungen der Ankerabstützung eingreifen.

Der dem Anker zugewandte freie Endbereich der Ankerabstützung kann auch kugelförmig ausgebildet sein. Durch diese Maßnahme wird eine minimale Auflagefläche für den Anker auf der Ankerabstützung geschaffen.

## Patentansprüche

1. Relaisventileinrichtung mit einem Relaisventil (38, 42, 28, 29, 30, 24, 22), dessen Steuerkammer (22) über ein elektromagnetisch betätigtes Einlaßventil (9, 12, 11, 13) und ein elektromagnetisch betätigtes Auslaßventil (17, 20, 21, 16) umfassendes Steuerventil (9, 12, 11, 13, 17, 20, 21, 16) mit einer Druckmittel-Steuerleitung (3) bzw. einer Druckmittelsenke verbindbar ist, sowie einem parallel zu dem Steuerventil (9, 12, 11, 13, 17, 20, 21, 16) angeordneten und in Richtung von der Druckmittel-Steuerleitung (3) zur Steuerkammer (22) hin absperrenden Rückschlagventil,
dadurch gekennzeichnet daß wenigstens ein Teil des Rückschlagventils (8, 41, 7, 46, 4, 44, 5) als Ankerabstützung (8, 41, 7, 46) für den Anker (9) des elektromagnetisch betätigten Einlaßventils (9, 12, 11, 13) des Steuerventils (9, 12, 11, 13, 17, 20, 21, 16) in der Offenstellung des elektromagnetisch betätigten Einlaßventils (9, 12, 11, 13) dient.

2. Relaisventileinrichtung nach Anspruch 1, dadurch gekennzeichnet, daß die Ankerabstützung (7, 8, 41, 46) und das Rückschlagventil (7, 8, 41, 46, 44, 4, 5) koaxial zum Anker (9) angeordnet sind.

3. Relaisventileinrichtung nach wenigstens einem der vorhergehenden Ansprüche, dadurch gekennzeichnet, daß das Rückschlagventil (7, 8, 41, 46, 44, 4, 5) von einer an der Ankerabstützung (7, 8, 41, 46) befestigten und diese ringförmig umgebenden Nutringdichtung (44, 4) mit einer Lippe (4) aus einem elastisch verformbaren Werkstoff und einer die Ankerabstützung (7, 8, 41, 46) mit Abstand umgebenden Wand (5) einer Ausnehmung (45) des Gehäuses (1) gebildet wird, an welcher die Lippe (4) der Nutringdichtung (44, 4) mit wenigstens einem Teil ihrer äußeren Mantelfläche dichtend anliegt.

4. Relaisventileinrichtung nach wenigstens einem der vorhergehenden Ansprüche, dadurch gekennzeichnet, daß die Ankerabstützung (7, 8, 41, 46) aus einem nichtmetalischen Werkstoff besteht.

5. Relaisventileinrichtung nach wenigsten einem der vorhergehenden Ansprüche, dadurch gekennzeichnet, daß die Nutringdichtung (44, 4) aus einem elastomeren Werkstoff besteht.

6. Relaisventileinrichtung nach wenigstens einem der vorhergehenden Ansprüche, dadurch gekennzeichnet, daß das Rückschlagventil aus einem an der Ankerabstützung (7, 8, 41, 46) angeordneten lappenartigen Dichtkörper besteht, der auf einem Durchlaß der Ankerabstützung (7, 8, 41, 51) aufliegt.

7. Relaisventileinrichtung nach wenigstens einem der vorhergehenden Ansprüche, dadurch gekennzeichnet, daß die Ankerabstützung (7, 8, 41, 46) mittels Schnappverbindungsmitteln mit der den Durchlaß (39) aufweisenden Wand (40) der Relaisventileinrichtung verbindbar ist.

8. Relaisventileinrichtung nach Anspruch 7, dadurch gekennzeichnet, daß die Schnappverbindungsmittel aus einem mit einem Kopf versehenen Stift bestehen, an dessen freien Endbereich Vorsprünge vorgesehen sind, welche in Vertiefungen der Ankerabstützung (7, 8, 41, 46) eingreifen.

9. Relaisventileinrichtung nach Anspruch 7, dadurch gekennzeichnet, daß der dem Anker (9) zugewandte freie Endbereich der Ankerabstützung (7, 8, 41, 46) kugelförmig ausgebildet ist.

## Claims

1. Relay valve device having a relay valve (38, 42, 28, 29, 30, 24, 22), the control chamber (22) of which is able to be connected by way of a control valve (9, 12, 11, 13, 17, 20, 21, 16) comprising an electromagnetically actuated inlet valve (9, 12, 11, 13) and an electromagnetically actuated outlet valve (17, 20, 21, 16) to a pressure medium control line (3) or a pressure medium sink, and also a non-return valve arranged parallel to the control valve (9, 12, 11, 13, 17, 20, 21, 16) and shutting-off in the direction from the pressure medium control line (3) towards the control chamber,
characterized in that at least a part of the non-return valve (8, 41, 7, 46, 44, 5) serves as armature support (8, 41, 7, 46) for the armature (9) of the electromagnetically actuated inlet valve (9, 12, 11, 13) of the control valve (9, 12, 11, 13, 17, 20, 21, 16) in the open position of the electromagnetically actuated inlet valve (9, 12, 11, 13).

2. Relay valve device according to Claim 1, characterized in that the armature support (7, 8, 41, 46) and the non-return valve (7, 8, 41, 46, 44, 4, 5) are arranged so as to be coaxial with the armature (9).

3. Relay valve device according to at least one of the preceding claims, characterized in that the non-return valve (7, 8, 41, 46, 44, 4, 5) is formed by a groove ring seal (44, 4), attached to the armature support (7, 8, 41, 46) and surrounding the latter in a ring shape, the seal having a lip (4) of an elastically deformable material, and by a wall (5), surrounding the armature support (7, 8, 41, 46) at a distance, of a recess (45) of the housing (1), against which recess the lip (4) of the groove ring seal (44, 4) bears sealingly with at least a part of its outer wall surface.

4. Relay valve device according to at least one of the preceding claims, characterized in that the armature support (7, 8, 41, 46) consists of a non-metallic material.

5. Relay valve device according to at least one of the preceding claims, characterized in that the groove ring seal (44, 4) consists of an elastomeric material.

6. Relay valve device according to at least one of the preceding claims, characterized in that the non-return valve consists of a flap-like sealing body which is arranged on the armature support (7, 8, 41, 46) and which lies on an opening in the armature support (7, 8, 41, 51).

7. Relay valve device according to at least one of the preceding claims, characterized in that the armature support (7, 8, 41, 46) is able to be connected by means of snap-connecting means to the wall (40), provided with the opening (39), of the relay valve device.

8. Relay valve device according to Claim 7, characterized in that the snap-connecting means consist of a pin which is provided with a head and the free end region of which is provided with projections which engage in depressions in the armature support (7, 8, 41, 46).

9. Relay valve device according to Claim 7, characterized in that the free end region, facing towards the armature (9), of the armature support (7, 8, 41, 46) is spherical in shape.

## Revendications

1. Dispositif de robinet relais comprenant un robinet relais (38, 42, 28, 29, 30, 24, 22) dont la chambre de commande (22) peut être reliée à une canalisation de commande par le fluide de pression (3), ou à un récepteur de fluide de pression, par un robinet de commande (9, 12, 11, 13, 17, 20, 21, 16) comportant une soupape d'admission (9, 12, 11, 13) à actionnement électromagnétique et une soupape d'échappement (17, 20, 21, 16) à actionnement électromagnétique, ainsi qu'une soupape antiretour disposée en parallèle avec le robinet de commande (9, 12, 11, 13, 17, 20, 21, 16) et se fermant dans le sens allant de la canalisation de commande par le fluide (3) vers la chambre de commande (22),
caractérisé en ce qu'une partie au moins de la soupape antiretour (8, 41, 7, 46, 4, 44, 5) sert, à la position ouverte de la soupape d'admission (9, 12, 11, 13) à actionnement électromagnétique, d'appui (8, 41, 7, 46) pour l'armature (9) de la soupape d'admission (9, 12, 11, 13) à actionnement électromagnétique.

2. Dispositif de robinet relais selon la revendication 1, caractérisé en ce que l'appui d'armature (7, 8, 41, 46) et la soupape antiretour (7, 8, 41, 46, 44, 4, 5) sont disposés coaxialement à l'armature (9).

3. Dispositif de robinet relais selon au moins une des revendications précédentes, caractérisé en ce que la soupape antiretour (7, 8, 41, 46, 44, 4, 5) est formée par une bague d'étanchéité profilée (44, 4) présentant une rainure annulaire, fixée à l'appui d'armature (7, 8, 41, 46) et entourant cet appui en anneau, bague profilée qui comporte une lèvre (4) faite d'un matériau élastiquement déformable, ainsi que par une paroi (5), entourant l'appui d'armature (7, 8, 41, 46) à distance, d'une cavité (45) du corps (1) du dispositif, paroi contre laquelle la lèvre (4) de la bague profilée (44, 45) est appliquée de façon étanche par une partie au moins de sa surface latérale extérieure.

4. Dispositif de robinet relais selon au moins une des revendications précédentes, caractérisé en ce que l'appui d'armature (7, 8, 41, 46) est fait d'un matériau non métallique.

5. Dispositif de robinet relais selon au moins une des revendications précédentes, caractérisé en ce que la bague d'étanchéité profilée (44, 4) est en élastomère.

6. Dispositif de robinet relais selon au moins une des revendications précédentes, caractérisé en ce que la soupape antiretour est formée d'un clapet semblable à une languette disposée sur l'appui d'armature (7, 8, 41, 46) et recouvrant un passage prévu dans cet appui.

7. Dispositif de robinet relais selon au moins une des revendications précédentes, caractérisé en ce que l'appui d'armature (7, 8, 41, 46) peut être relié par des moyens d'encliquetage à la paroi (40) du dispositif de robinet relais présentant le passage (39).

8. Dispositif de robinet relais selon la revendication 7, caractérisé en ce que les moyens d'encliquetage sont formés d'une tige pourvue d'une tête et à la portion extrême libre de laquelle sont prévues des saillies engagées dans des creux de l'appui d'armature (7, 8, 41, 46).

9. Dispositif de robinet relais selon la revendication 7, caractérisé en ce que la partie extrême libre dirigée vers l'armature (9) de l'appui d'armature (7, 8, 41, 46) possède une forme sphérique.
